# FASCICULE DE BREVET EUROPEEN

(11) **EP 1 601 225 B1**
(45) Date de publication et mention de la délivrance du brevet: **22.07.2009**
(21) Numéro de dépôt: 05291136.9
(22) Date de dépôt: 26.05.2005
(51) Int. Cl.: H04W 12/06, H04W 8/20

(54) **Procédé et systéme de duplication sécurisée des informations d'une carte SIM**
Vorrichtung und Verfahren zur gesicherte Vervielfältigung von SIM-Karte-Informationen
Method and apparatus for secure duplication of SIM card informations

(30) Priorité: 27.05.2004 FR 0405735
(43) Date de publication de la demande: 30.11.2005
(73) Titulaire: Societé Française du Radiotéléphone, 75008 Paris (FR)
(72) Inventeur: Faisy, Christian, 97417 La Montagne (FR)
(74) Mandataire: Debay, Yves

(56) Documents cités:
- EP-A1- 0 786 916
- EP-A1- 1 398 934
- GB-A- 2 365 699

## Description

La présente invention concerne le domaine des télécommunications et, en particulier, celui de la téléphonie mobile. L'invention concerne plus particulièrement un procédé et un système pour la mise en oeuvre du procédé, permettant à un souscripteur d'abonnement de téléphonie d'utiliser différents objets communicants, tout en ne possédant physiquement qu'une seule carte SIM (« Module d'identité du souscripteur » ou « Subscriber Identity Module » en anglais).

Les réseaux de téléphonie mobile fonctionnent grâce à des opérateurs qui fournissent un accès téléphonique à leurs souscripteurs d'abonnement dont l'identité (IMSI, pour l'anglais « International Mobile Subscriber ldentity »), le numéro d'appel et le profil sont enregistrés dans un registre nominal de localisation (HLR, pour l'anglais « Home Location Register ») de l'opérateur et dans des centres d'authentification. Le souscripteur d'abonnement possède un équipement mobile identifié par un numéro de série (IMEI, pour l'anglais « International Mobile Equipment Identity ») et contenant une carte SIM dans laquelle est stockée, en outre, l'IMSI du souscripteur d'abonnement. Lorsque le souscripteur d'abonnement utilise le réseau de l'opérateur, l'IMSI stocké dans la carte SIM du souscripteur est envoyé, par son équipement mobile, vers un centre d'authentification, pour vérification de la validité de l'IMSI et vers une base de données HLR de l'opérateur, pour vérification du profil et de l'état de l'abonnement du souscripteur. Le fonctionnement de l'équipement mobile est conditionné par la saisie d'un code secret associé à la carte SIM. Les cartes SIM permettent donc de sécuriser l'utilisation des abonnements souscrits par les utilisateurs du réseau de l'opérateur, grâce à une authentification au niveau de l'équipement mobile et au niveau du réseau. Les communications effectuées par le souscripteur d'abonnement peuvent ainsi être comptabilisées et facturées à ce souscripteur. Cependant, ce fonctionnement oblige les souscripteurs à utiliser leur carte SIM dans un équipement mobile compatible pour pouvoir utiliser leur abonnement. S'ils souhaitent utiliser un équipement mobile différent du leur, il leur faut extraire la carte SIM de leur équipement mobile pour la placer dans un autre objet communicant, à condition que celui-ci fonctionne avec la carte SIM. Si un souscripteur d'abonnement souhaite pouvoir utiliser plusieurs objets communicants à la fois, il lui faudra demander plusieurs cartes SIM « jumelles » à son opérateur. Les IMSI associés à chacune des cartes SIM devront être rattachés à l'abonnement du souscripteur, qui devra posséder autant de cartes SIM que d'objets communicants. Ces solutions présentent donc les inconvénients d'être coûteuses et peu pratiques à mettre en oeuvre, aussi bien pour les opérateurs que pour les souscripteurs d'abonnements.

Le document GB-A-2365699 divulgue un procédé de duplication sécurisée des informations d'une carte SIM vers un objet communicant dans lequel, après la reconnaissance mutuelle entre l'équipement mobile et l'object communicant, l'équipement mobile envoie, sous forme cryptée, les informations de la carte SIM vers l'objet communicant, qui enregistre ces données dans des moyens de mémorisation. Le même document divulgue aussi un procédé ("twin card concept") dans lequel l'opérateur envoie une seconde carte SIM, avec les même informations de la première carte, dans le cas ou l'utilisateur en fait requête.

Un premier but de la présente invention est de supprimer certains inconvénients de l'art antérieur en proposant un procédé de duplication sécurisée des informations d'une carte SIM vers au moins un objet communicant, permettant à un souscripteur d'abonnement d'utiliser au moins un objet communicant distinct de son équipement mobile.

Ce but est atteint par un procédé de duplication sécurisée d'au moins une partie des informations d'une carte SIM vers au moins un objet communicant qui est en communication avec un équipement mobile via une liaison locale sans fil, caractérisé en ce qu'il est mis en oeuvre par un équipement mobile, au moins un équipement opérateur et au moins un objet communicant, reliés entre eux via un réseau téléphonique sans fil et/ou via une liaison locale sans fil et en ce qu'il comporte les étapes suivantes :
- reconnaissance mutuelle entre l'équipement mobile et l'objet communicant, puis envoi, sous forme cryptée, du numéro de série IMEI stocké dans des moyens de mémorisation de l'objet communicant, par des moyens de traitement de l'objet communicant, vers des moyens de traitement de l'équipement mobile,
- réception de l'IMEI de l'objet communicant par l'équipement mobile, puis envoi, vers des moyens de traitement d'au moins un équipement opérateur, grâce aux moyens de traitement de l'équipement mobile, d'une demande de clonage d'un IMSI matrice associé à la carte SIM de l'équipement mobile, accompagnée de l'IMEI, sous forme cryptée, de l'objet communicant auquel les données doivent être affectées,
- réception de la demande de clonage par les moyens de traitement d'un équipement opérateur, qui effectuent, par consultation de moyens de mémorisation d'un équipement opérateur, une authentification de l'IMSI matrice reçu et une authentification de l'IMEI de l'objet communicant.

Selon une particularité, suite aux étapes d'authentification de l'IMSI matrice de l'équipement mobile et d'authentification de l'IMEI crypté de l'objet communicant, lorsqu'au moins un identifiant, parmi l'IMSI et l'IMEI, n'est pas authentifié, les moyens de traitement d'un équipement opérateur réalisent une étape d'envoi d'un message de refus du clonage vers les moyens de traitement de l'équipement mobile qui proposent alors au souscripteur d'abonnement un retour à l'étape de reconnaissance mutuelle entre l'équipement mobile et l'objet communicant.

Selon une particularité, suite aux étapes d'authentification de l'IMSI matrice de l'équipement mobile et d'authentification de l'IMEI crypté de l'objet communicant, lorsque l'IMSI et l'IMEI sont tous les deux authentifiés, le procédé se poursuit par les étapes suivantes:
- création, dans les moyens de mémorisation d'un équipement opérateur, d'un IMSI clone auquel sont associés l'IMEI de l'objet communicant et l'IMSI matrice correspondant à la carte SIM de l'équipement mobile, puis un envoi, vers l'équipement mobile, d'une autorisation de copie des données de sa carte SIM dans des moyens de mémorisation de l'objet communicant,
- réception de l'autorisation de copie des données par l'équipement mobile, puis copie et envoi des données de la carte SIM, par les moyens de traitement de l'équipement mobile vers les moyens de traitement de l'objet communicant,
- réception des données de la carte SIM, par les moyens de traitement de l'objet communicant, puis enregistrement de ces données dans des moyens de mémorisation de l'objet communicant.

Selon une particularité, le procédé comporte une étape préalable d'accord de l'opérateur, consistant en l'enregistrement, dans les moyens de mémorisation d'au moins un équipement opérateur, d'une part, d'une pluralité d'IMSI virtuels, en attente d'affectation à un abonnement d'un souscripteur et, d'autre part, d'une pluralité de numéros de série IMEI correspondant à des objets communicants déclarés par les constructeurs d'objets communicants et autorisés par l'opérateur et d'une clé de décryptage commune à tous les objets communicants déclarés, l'étape d'authentification de l'IMEI de l'objet communicant consistant en un décryptage, grâce à la clé de décryptage stockée, de l'IMEI reçu et en sa comparaison avec la pluralité d'IMEI stockée dans les moyens de mémorisation d'un équipement opérateur, l'étape de création d'un IMSI clone auquel sont associés l'IMEI de l'objet communicant et l'IMSI matrice consistant en une authentification de l'IMSI matrice par consultation d'un centre d'authentification, suivie d'une vérification du profil d'abonnement associé à l'IMSI matrice pour déterminer si le clonage est autorisé, puis, le cas échéant, en une affectation d'un des IMSI virtuels comme clone de l'IMSI matrice du souscripteur d'abonnement dans les moyens de mémorisation d'un équipement opérateur, puis en l'association de l'IMEI de l'objet communicant authentifié à cet IMSI virtuel devenu clone.

Selon une particularité, au moins certaines étapes du procédé peuvent être contrôlées par le souscripteur d'abonnement, grâce à des moyens de saisie et d'affichage, présents dans l'équipement mobile et dans l'objet communicant, permettant l'interactivité du souscripteur d'abonnement avec une application logicielle, exécutée sur les moyens de traitement de l'équipement mobile et de l'objet communicant pour permettre leur interopérabilité.

Selon une particularité, l'étape de reconnaissance mutuelle entre l'équipement mobile et l'objet communicant repose sur les protocoles de détection entre appareils munis de modules de liaison locale sans fil, consistant en un balayage (scanning) de la zone d'influence d'un module maître, à la recherche de modules esclaves, et résulte en une détection de l'objet communicant par l'équipement mobile, grâce à des modules respectifs de liaison locale sans fil, respectivement en modes esclave et maître, cette détection étant suivie d'un envoi, par l'équipement mobile vers l'objet communicant, d'une demande de rapport sur l'état d'affectation de l'objet communicant à un éventuel IMSI d'un souscripteur d'abonnement.

Selon une particularité, suite à l'étape de reconnaissance mutuelle entre l'équipement mobile et l'objet communicant, lorsque l'objet communicant est affecté à un IMSI clone ne correspondant pas à l'IMSI matrice stocké dans l'équipement mobile, l'application logicielle de l'équipement mobile propose un retour à l'étape de reconnaissance mutuelle entre l'équipement mobile et l'objet communicant, de façon à empêcher toute modification de cette affectation à partir d'un équipement mobile ne correspondant pas à l'IMSI matrice du souscripteur d'abonnement auquel l'objet communicant a été affecté au préalable.

Selon une particularité, suite à l'étape de reconnaissance mutuelle entre l'équipement mobile et l'objet communicant, lorsque l'objet communicant est affecté à un IMSI clone correspondant à l'IMSI matrice stocké dans l'équipement mobile, l'application logicielle de l'équipement mobile propose une étape de détachement de l'IMSI clone de l'objet communicant, permettant la suppression, dans les moyens de mémorisation de l'objet communicant, des données copiées à partir de la carte SIM du souscripteur d'abonnement.

Selon une particularité, suite à l'étape de reconnaissance mutuelle entre l'équipement mobile et l'objet communicant, lorsque l'objet communicant n'est affecté à aucun IMSI matrice, l'application logicielle propose une étape de confirmation de l'affectation d'un IMSI clone à l'objet communicant, cette confirmation résultant, le cas échéant, en l'envoi, par l'équipement mobile, d'une demande de transmission de l'IMEI de l'objet communicant, suivi d'une réponse de l'objet communicant qui effectue l'envoi, sous forme cryptée, de l'IMEI stocké dans ses moyens de mémorisation, vers l'équipement mobile.

Selon une particularité, l'étape d'enregistrement des données de la carte SIM dans les moyens de mémorisation de l'objet communicant est précédée d'une éventuelle étape de suppression des données éventuellement stockées au préalable dans ses moyens de mémorisation.

Selon une particularité, les étapes d'enregistrement des données de la carte SIM dans les moyens de mémorisation de l'objet communicant et d'affectation d'un IMSI clone à l'objet communicant permettent ensuite la mise en oeuvre des étapes standard d'authentification de l'objet communicant sur le réseau de l'opérateur, pour l'utilisation des communications autorisées pour l'abonnement du souscripteur.

Selon une particularité, le procédé comporte également une étape de mise à jour des données relatives à l'IMSI clone dans les moyens de mémorisation de l'objet communicant du souscripteur d'abonnement, cette mise à jour consistant en une écriture, le cas échéant, des nouvelles données dans les moyens de mémorisation de l'objet communicant, sous le contrôle des moyens de traitement d'un équipement opérateur, suite aux étapes standard d'authentification de l'objet communicant sur le réseau de l'opérateur, lors de l'utilisation des communications autorisées pour l'abonnement du souscripteur.

Selon une particularité, l'étape de mise à jour des données relatives à l'IMSI clone dans les moyens de mémorisation de l'objet communicant du souscripteur d'abonnement peut également consister en une écriture des nouvelles données dans les moyens de mémorisation de l'objet communicant, sous le contrôle des moyens de traitement de l'équipement mobile du souscripteur d'abonnement, suite à une nouvelle étape de reconnaissance mutuelle entre l'équipement mobile et l'objet communicant, initiée par le souscripteur d'abonnement.

Un second but de la présente invention est de supprimer certains inconvénients de l'art antérieur en proposant un système de duplication sécurisée des informations d'une carte SIM vers au moins un objet communicant, permettant à un souscripteur d'abonnement d'utiliser au moins un objet communicant distinct de son équipement mobile, sans nécessiter une seconde carte SIM pour sécuriser l'utilisation de l'objet communicant.

Ce but est atteint par un système de duplication sécurisée des informations d'une carte SIM vers au moins un objet communicant, permettant la mise en oeuvre des étapes du procédé selon l'invention, comprenant un équipement mobile, relié à au moins un équipement opérateur via un réseau téléphonique sans fil et au moins un objet communicant relié à l'équipement mobile via une liaison locale sans fil, grâce à la présence, dans ces dispositifs, de modules de communication téléphonique sans fil et de modules de communication par liaison locale sans fil, caractérisé en ce que l'équipement mobile et l'objet communicant comportent des moyens de mémorisation d'une application logicielle et des moyens de traitement exécutant cette application, qui permet leur interopérabilité et leur interactivité avec un souscripteur d'abonnement, les moyens de traitement de l'objet communicant permettant, sur réception d'une demande d'IMEI envoyée par l'équipement mobile, le cryptage de l'IMEI stocké dans ses moyens de mémorisation, grâce à une clé de cryptage stockée dans ses moyens de mémorisation et l'envoi crypté de cet IMEI vers les moyens de traitement de l'équipement mobile, ces moyens de traitement de l'équipement mobile permettant, en outre, l'association de l'IMEI crypté de l'objet communicant et de l'IMSI matrice, stocké dans la carte SIM de l'équipement mobile, en une demande de clonage des données de la carte SIM et l'envoi de cette demande de clonage vers un équipement opérateur.

Selon une particularité, au moins un équipement opérateur comporte des moyens de mémorisation dans lesquels sont stockés, en outre, une pluralité d'IMEI correspondant à des objets communicants déclarés par les constructeurs d'objets communicants et autorisés par l'opérateur et une clé de décryptage commune à tous les IMEI déclarés, des moyens de traitement d'un équipement opérateur permettant, d'une part, une authentification de l'IMEI de l'objet communicant, reçu de l'équipement mobile requérant le clonage des données de sa carte SIM et, d'autre part, une création d'un IMSI clone, correspondant à une affectation d'une copie de l'IMSI matrice de l'équipement mobile à l'objet communicant dont l'IMEI a été reçu en association avec la demande de clonage des données de la carte SIM de l'équipement mobile.

Selon une particularité, les moyens de mémorisation d'un équipement opérateur comportent une pluralité d'IMSI virtuels, en attente d'affectation à un abonnement d'un souscripteur, des moyens de traitement de l'équipement opérateur permettant la création d'un IMSI clone, lors d'une demande de clonage des données de la carte SIM d'un équipement mobile, correspondant, d'une part, à une transformation d'un de ces IMSI virtuels en un IMSI clone, copié à partir de l'IMSI matrice de l'équipement mobile requérant et, d'autre part, à une association de l'IMEI de l'objet communicant affecté à cet IMSI clone.

Selon une particularité, les moyens de traitement de l'équipement mobile et de l'objet communicant autorisent le contrôle des moyens de mémorisation de l'objet communicant par l'équipement mobile et permettent l'enregistrement d'une copie des données de la carte SIM de l'équipement mobile dans les moyens de mémorisation de l'objet communicant.

Selon une particularité, les moyens de traitement d'un équipement opérateur réalisent la vérification de l'intégrité de l'IMEI reçu de l'équipement mobile requérant le clonage des données de sa carte SIM dans un objet communicant identifié par cet IMEI, grâce, d'une part, à des moyens de décryptage de cet IMEI reçu, à l'aide de la clé de décryptage stockée dans les moyens de mémorisation d'un équipement opérateur, et, d'autre part, à des moyens de comparaison de cet IMEI décrypté avec la pluralité d'IMEI stockée dans les moyens de mémorisation d'au moins un équipement opérateur.

Selon une particularité, les moyens de traitement d'au moins un équipement opérateur comportent des moyens de réaliser automatiquement la mise à jour des données relatives à l'IMSI clone, en cas de changement des données de la carte SIM de l'équipement mobile et des moyens d'enregistrer directement les nouvelles données, via un réseau téléphonique sans fil, dans les moyens de mémorisation de l'objet communicant, grâce aux moyens de traitement de l'objet communicant qui autorisent cet enregistrement.

Selon une particularité, les moyens de traitement de l'équipement mobile comportent des moyens de réaliser automatiquement la mise à jour des données relatives à l'IMSI clone, en cas de changement des données de la carte SIM de l'équipement mobile et des moyens d'enregistrer directement les nouvelles données, via un réseau téléphonique sans fil ou via une liaison locale sans fil, dans les moyens de mémorisation de l'objet communicant, grâce aux moyens de traitement de l'objet communicant qui autorisent cet enregistrement.

Selon une particularité, les moyens de traitement de l'objet communicant auquel a été affecté un IMSI clone exécutent une application permettant, à partir des données enregistrées dans ses moyens de mémorisation, l'utilisation de l'abonnement du souscripteur.

Selon une particularité, la pluralité d'IMEI stockée dans les moyens de mémorisation d'un équipement opérateur est associée à des informations permettant la gestion des IMEI des objets communicants volés ou perdus et les moyens de traitement d'au moins un équipement opérateur interdisent, le cas échéant, toute association d'un IMEI déclaré volé ou perdu avec un IMSI clone requis par un équipement mobile.

Selon une particularité, les modules de communication par liaison locale sans fil, présents dans l'équipement mobile, l'objet communicant et un équipement opérateur, sont des modules émetteur/récepteur Bluetooth®.

Selon une particularité, les modules de communication par un réseau téléphonique sans fil, présents dans l'équipement mobile, l'objet communicant et l'équipement opérateur, sont compatibles avec les réseaux GSM/DCS et UMTS.

D'autres particularités et avantages de la présente invention apparaîtront plus clairement à la lecture de la description ci-après, faite en référence aux dessins annexés, dans lesquels :

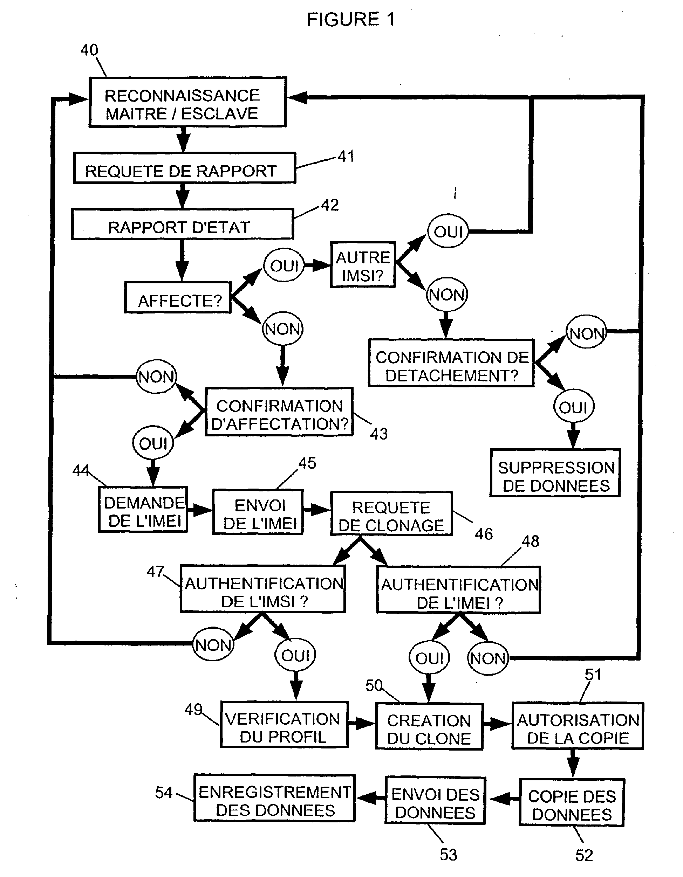

- la figure 1 représente un schéma des étapes du procédé selon l'invention ;

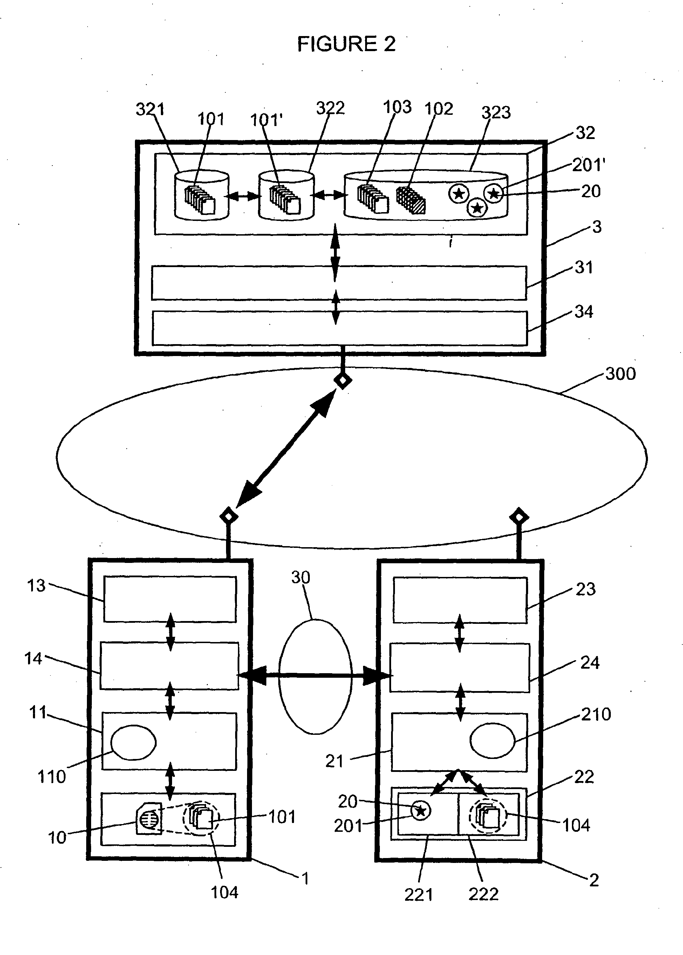

- la figure 2 représente un schéma du système selon l'invention ;

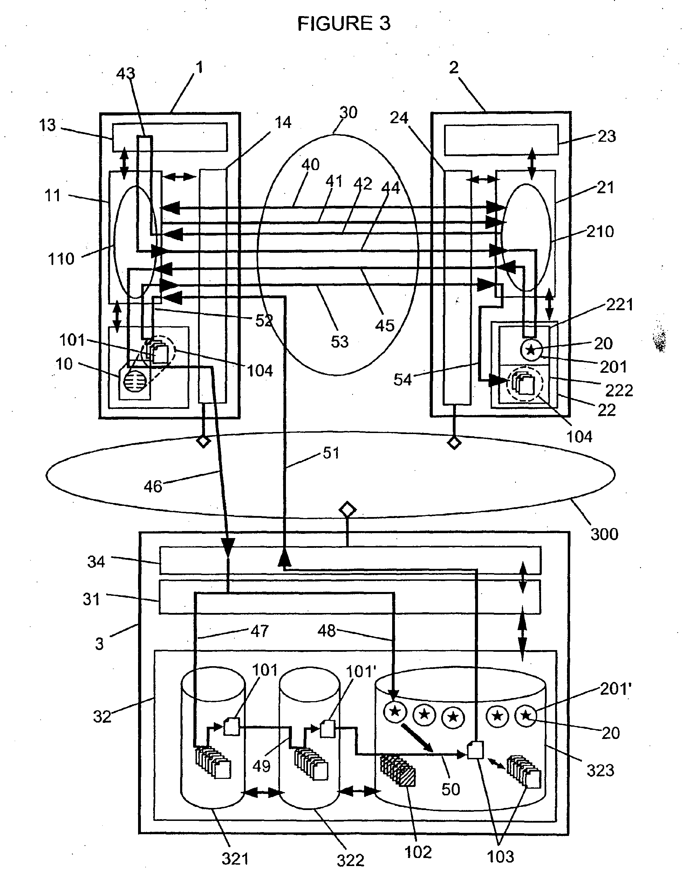

- la figure 3 représente un schéma des étapes du procédé selon l'invention, tel qu'il est mis en oeuvre par le système selon l'invention.

L'invention concerne un procédé de duplication sécurisée d'au moins une partie des informations (104) d'une carte SIM (10) vers au moins un objet communicant (2). L'invention concerne également un système permettant la mise en oeuvre de ce procédé. Le système selon l'invention est constitué d'un équipement mobile (1), par exemple un téléphone portable, au moins un objet communicant (2), par exemple un ou plusieurs téléphone(s) portable(s) ou bien un ou plusieurs PDA (« assistant digital personnel » ou « Personal Digital Assistant », en anglais) et au moins un équipement opérateur (3). Sous le terme de équipement opérateur (3), on considèrera l'ensemble des équipements (centre d'authentification, registre nominal de localisation, etc.) d'un opérateur donné, permettant l'identification et la mise en communication des téléphones portables dans leurs zones d'influence. Pour des raisons de simplicité, on considèrera qu'il s'agit d'un seul terminal, bien qu'il soit évident qu'il s'agissent en réalité d'un réseau constitué de plusieurs équipements communiquant entre eux. Les réseaux des opérateurs sont organisés en relais, avec des terminaux centraux dans lesquels des bases de données permettent l'identification des téléphones mobiles requérant une mise en communication. Comme expliqué précédemment, certaines bases de données présentes dans des centres d'authentification (321) permettent de vérifier la validité des IMSI (101) communiqués par les téléphones portables. D'autres bases de données présentes dans des terminaux HLR (322) permettent le stockage du profil (101') de l'abonnement des différents abonnés de l'opérateur téléphonique en communication avec le réseau. Le profil (101') correspond ici à l'ensemble des services souscrits par un abonné identifié par un IMSI (101). Le système selon l'invention comporte une base de données (323) supplémentaire, pour le stockage d'une pluralité d'IMEI (20) correspondant, par exemple, à des numéros de série d'objets communicants, par exemple des téléphones portables, déclarés par les fabricants et autorisés par l'opérateur. Cette base de données (323) pourra donc servir à la gestion des objets communicants perdus ou volés et permettre à l'opérateur d'interdire l'utilisation d'un appareil déclaré perdu ou volé. Cette base de données (323) permet également le stockage d'une pluralité d'IMSI virtuels (102), en attente d'affectation à un abonnement, comme décrit ci-après. L'équipement opérateur (3) selon l'invention comporte donc des moyens (32) de mémorisation spécifiques et des moyens (31) de traitement spécifiques, pour la gestion des informations stockées et envoyées vers les équipements mobiles requérant la mise en oeuvre du procédé selon l'invention.

La mise en oeuvre du procédé selon l'invention nécessite un accord préalable de l'opérateur qui organisera un réseau de terminaux permettant différentes étapes telles que l'authentification des IMSI (101) et des IMEI (20) des équipements mobiles (1), ou la création d'IMSI clones (103) dans les bases de données (323), comme expliqué ci-après. Cet accord de l'opérateur, consistera en l'enregistrement, dans une base de données (323), stockée dans les moyens (32) de mémorisation d'au moins un équipement opérateur (3), d'une part, d'une pluralité d'IMSI virtuels (102), en attente d'affectation à un abonnement d'un souscripteur et, d'autre part, d'une pluralité de numéros de série IMEI (20), correspondant à des objets communicants (2) déclarés par les constructeurs d'objets communicants et autorisés par l'opérateur, ainsi que d'une clé (201') de décryptage, commune à tous les IMEI des objets déclarés. On notera qu'il est connu de l'art antérieur que l'envoi d'informations sensibles, telles que des codes d'authentification ou des numéros de série, sur un réseau se fait fréquemment sous forme cryptée. Aucun détail ne sera donné sur le cryptage de l'IMEI, leurs clés de cryptage et la clé de décryptage. Il est d'ailleurs évident que le décryptage peut être réalisé à l'aide d'une pluralité de clés de décryptage (au lieu d'une seule clé commune), chacune étant associée à une clé de cryptage, à l'aide, par exemple, d'un identifiant.

Le procédé et le système selon l'invention permettent, par exemple, à un souscripteur d'abonnement d'effectuer une duplication sécurisée des informations (104) stockées dans la carte SIM (10) de son téléphone portable vers un autre téléphone. Ainsi, le souscripteur d'abonnement pourra utiliser tous les services auxquels il a souscrit, sur plusieurs appareils différents, tout en ne possédant qu'un seul abonnement et qu'une seule carte SIM (10). De la même façon, plusieurs personnes pourront profiter des services d'un seul abonnement sur différents appareils en même temps. Les informations (104) stockées dans la carte SIM (10) concernent l'IMSI (101) associé à l'abonnement souscrit mais également diverses informations telles que des répertoires téléphoniques, par exemple. Aucun détail ne sera donné sur ces informations et il est évident que le procédé et le système selon l'invention permettent la duplication de l'ensemble ou d'une partie de ces informations, selon le choix du souscripteur.

Dans le mode de réalisation décrit ici, la duplication des données (104) stockées dans la carte SIM (10) se fait par communication, d'une part, de l'équipement mobile (1) du souscripteur avec un objet communicant (2), via une liaison (30) locale sans fil, par exemple, de type Bluetooth® et, d'autre part, de l'équipement mobile (1) du souscripteur avec l'équipement opérateur, via un réseau (300) de téléphonie sans fil, par exemple de type GSM/DCS ou UMTS. Il est évident que le procédé et le système selon l'invention permettent d'autres modes de réalisation, au moins en ce qui concerne le type de communication utilisé entre les appareils constitutifs du système.

Lorsque le souscripteur d'abonnement désire réaliser une duplication sécurisée des informations de sa carte SIM (10), il initie les étapes du procédé à l'aide de son équipement mobile (1), dont les moyens (11) de traitement exécutent une application logicielle (110) permettant l'interopérabilité de l'équipement mobile (1) avec l'équipement opérateur (3) et l'objet communicant (2) sur lequel les données doivent être dupliquées. Les moyens (21) de traitement de l'objet communicant (2) exécutent une application logicielle (210) similaire. De même, les moyens (31) de traitement de l'équipement opérateur (3) sont adaptés de façon à permettre un dialogue avec l'application (110) exécutée sur les moyens (11) de traitement de l'équipement mobile (1). Cette application (110) de l'équipement mobile (1) permet également au souscripteur de contrôler certaines étapes du procédé, grâce à une interactivité à l'aide de moyens (13) de saisie et d'affichage présents dans l'équipement mobile (1). En sélectionnant, par exemple, un menu spécifique, le souscripteur lance l'application (110) qui initie la première étape du procédé, permettant une reconnaissance (40) mutuelle de l'équipement mobile (1) et de l'objet communicant (2). Cette étape de reconnaissance (40) mutuelle entre l'équipement mobile (1) et l'objet communicant (2) repose sur les protocoles de détection entre appareils munis de modules (14, 24) de liaison (30) locale sans fil, par exemple de type Bluetooth®. Selon ces protocoles, un appareil fonctionne en mode « maître » et scrute la zone d'influence (30) émise par son module (14) d'émission/réception Bluetooth®, pour y détecter d'éventuels appareils également munis d'un module d'émission/réception Bluetooth® et fonctionnant en mode « esclave ». L'appareil « maître » contrôle les communications et les opérations réalisées par l'appareil « esclave ». La présence, dans l'objet communicant (2) et l'équipement mobile (1), de modules Bluetooth® (24, 14 respectivement) de liaison (30) locale sans fil, respectivement en modes esclave (24) et maître (14) permet la reconnaissance (40) mutuelle entre ces deux appareils. Lorsque le souscripteur initie les étapes du procédé sur l'équipement mobile (1), ce dernier passe automatiquement en mode maître pour détecter un objet communicant (2), qui aura été préalablement paramétré pour fonctionner en mode « esclave », par exemple grâce à ses moyens (23) de saisie et d'affichage. Cette détection (40) de l'objet communicant (2) par l'équipement mobile (1) résulte en l'envoi, par l'équipement mobile (1) vers l'objet communicant (2), d'une demande (41) de rapport sur l'état d'affectation de l'objet communicant (2) à un éventuel IMSI d'un souscripteur d'abonnement. L'objet communicant (2) renvoie alors un rapport (42) sur son état d'affectation à un éventuel IMSI. Si l'objet communicant (2) est déjà affecté à un IMSI clone (103) ne correspondant pas à l'IMSI matrice (101) stocké dans l'équipement mobile (1) du souscripteur d'abonnement, l'application logicielle (110) de l'équipement mobile (1) propose un retour à l'étape de reconnaissance (40) mutuelle entre l'équipement mobile (1) et un objet communicant (2). De cette façon, on empêche toute modification de l'affectation de l'objet communicant (2) à partir d'un équipement mobile (1) dont l'IMSI (101) ne correspondrait pas à celui auquel l'objet communicant (2) a été affecté au préalable. Si l'objet communicant (2) est affecté à un IMSI clone (103) correspondant à l'IMSI matrice (101) stocké dans l'équipement mobile (1) du souscripteur d'abonnement, l'application logicielle (110) propose une étape de détachement de l'IMSI clone (103) de l'objet communicant (2), permettant la suppression, dans les moyens (22) de mémorisation de l'objet communicant (2), des données (104) copiées à partir de la carte SIM (10) du souscripteur d'abonnement. Si l'objet communicant (2) n'est affecté à aucun IMSI matrice (101), l'application logicielle (110) propose une étape de confirmation (43) de l'affectation d'un IMSI clone (103) à l'objet communicant (2). Si le souscripteur confirme ce choix, son équipement mobile (1) envoie une demande (44) de transmission de l'IMEI (20) de l'objet communicant (2). L'objet communicant (2) répond alors par l'envoi (45), sous forme cryptée, de l'IMEI (20) stocké dans une mémoire non volatile (221), par exemple de type ROM (pour l'anglais « Read Only Memory »), dans ses moyens (22) de mémorisation. A la réception de l'IMEI (20) de l'objet communicant (2), les moyens (11) de traitement de l'équipement mobile (1) envoient, sous forme cryptée, vers des moyens (31) de traitement d'un équipement opérateur (3), une demande (46) de clonage des données (104) stockées dans la carte SIM (10) de l'équipement mobile (1), accompagnée d'un IMSI matrice (101) associé à la carte SIM (10) et de l'IMEI (20) de l'objet communicant (2) auquel les données (104) doivent être affectées. A la réception de la demande (46) de clonage par les moyens (31) de traitement de l'équipement opérateur, la consultation de moyens (32) de mémorisation d'un équipement opérateur (3) permet une authentification (47) de l'IMSI matrice (101) reçu et une authentification (48) de l'IMEI (20) de l'objet communicant (2). Comme introduit ci-dessus, cette consultation pourra consister en un dialogue entre les moyens (31) de traitement d'un équipement opérateur avec des bases de données (321, 322) distantes, pour l'authentification de l'IMSI et de l'IMEI reçus. L'étape (48) d'authentification de l'IMEI (20) de l'objet communicant (2) consiste en un décryptage, grâce à la clé (201) de cryptage stockée, de l'IMEI (20) reçu et en sa comparaison avec la pluralité d'IMEI (20) stockée dans les moyens (32) de mémorisation d'un équipement opérateur (3). L'étape d'authentification (47) de l'IMSI matrice est réalisée par consultation d'une base de données (321), ou « centre d'authentification », pour vérifier la validité de l'IMSI matrice (101) reçu. Ensuite, L'IMSI matrice (101) reçu permet une vérification (49) du profil (101') d'abonnement associé à l'IMSI matrice (101), afin de déterminer si le clonage est autorisé. Si le profil (101') indique que l'abonnement du souscripteur permet le clonage de l'IMSI matrice (101) reçu, les moyens (31) de traitement de l'équipement opérateur (3) réalisent une étape (50) de création d'un IMSI clone (103) auquel sont associés l'IMEI (20) de l'objet communicant (2) et l'IMSI matrice (101). Cette étape consiste en une affectation (50) d'un clone (103) de l'IMSI matrice (101) du souscripteur d'abonnement à un des IMSI virtuels (102) stockés dans les moyens (32) de mémorisation d'un équipement opérateur (3), puis en l'association de l'IMEI (20) de l'objet communicant (2) authentifié à cet IMSI clone (103). Si les services souscrits ne permettent pas le clonage, alors un message, par exemple, de refus du clonage est envoyé par l'équipement opérateur (3) vers l'équipement mobile (1) dont l'application (110), par exemple, signale au souscripteur d'abonnement la nécessité de souscrire à un service complémentaire. Si le profil (101') a permis le clonage, un message de confirmation (51) du clonage est envoyé par l'équipement opérateur (3) vers l'équipement mobile (1). A la réception de la confirmation (51) du clonage par l'équipement mobile (1), l'application (110) réalise une copie (52) des données (104) de la carte SIM (10), puis un envoi (53) de ces données (104) vers l'application (210) exécutée sur les moyens (21) de traitement de l'objet communicant (2), qui effectue un enregistrement (54) de ces données (104) dans une mémoire (222) volatile, par exemple de type RAM (pour l'anglais « Random Acces Memory »), dans les moyens (22) de mémorisation de l'objet communicant (2). Cette étape d'enregistrement (54) des données (104) dans la mémoire RAM (222) de l'objet communicant (2) est précédée d'une éventuelle étape de suppression des données éventuellement stockées au préalable. Une fois ces données (104) enregistrées, l'objet communicant (2) est apte à utiliser le profil (101') du souscripteur d'abonnement et l'IMSI clone (103) qui lui est affecté sera reconnu par les centres d'authentification (321), grâce à la synchronisation systématique des bases de données (321, 322, 323) de l'opérateur.

Le procédé selon l'invention permet également une étape de mise à jour des données relatives à l'IMSI clone (103) dans les moyens (22) de mémorisation de l'objet communicant (2) du souscripteur d'abonnement, en cas de changement du profil (101') du souscripteur d'abonnement. Grâce à la synchronisation systématique entre les bases de données (321, 322, 323) de l'opérateur, la base de données (323) détecte automatiquement la nécessité d'une mise à jour. Cette mise à jour consiste en une écriture des nouvelles données dans les moyens (22) de mémorisation de l'objet communicant (2), sous le contrôle des moyens (31) de traitement d'un équipement opérateur (3), suite aux étapes standard d'authentification de l'objet communicant (2) sur le réseau (300) de l'opérateur, lors de l'utilisation des communications autorisées pour l'abonnement du souscripteur. Cette écriture pourra se faire grâce à une communication à distance du type de la technologie OTA® (pour l'anglais « Over The Air ») ou du type des liaisons sans fil locales, tel que le Bluetooth®. Dans une autre variante de réalisation, l'étape de mise à jour des données relatives à l'IMSI clone (103) dans les moyens (22) de mémorisation de l'objet communicant (2) du souscripteur d'abonnement peut également consister en une écriture des nouvelles données dans les moyens (22) de mémorisation de l'objet communicant, sous le contrôle des moyens (11) de traitement de l'équipement mobile (1) du souscripteur d'abonnement, suite à une nouvelle étape de reconnaissance (40) mutuelle entre l'équipement mobile (1) et l'objet communicant (2), initiée par le souscripteur d'abonnement.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de duplication sécurisée d'au moins une partie des informations d'une carte SIM (10) vers au moins un objet communicant (2) qui est en communication avec un équipement mobile (1) via une liaison (30) locale sans fil, **caractérisé en ce qu'**il est mis en oeuvre par un équipement mobile (1), au moins un équipement opérateur (3) et au moins un objet communicant (2), reliés entre eux via un réseau (300) téléphonique sans fil et/ou via une liaison (30) locale sans fil et **en ce qu'**il comporte les étapes suivantes :
- reconnaissance (40) mutuelle entre l'équipement mobile (1) et l'objet communicant (2), puis envoi (45), sous forme cryptée (201), du numéro de série IMEI (20) stocké dans des moyens (22) de mémorisation de l'objet communicant (2), par des moyens (21) de traitement de l'objet communicant (2), vers des moyens (11) de traitement de l'équipement mobile (1),
- réception de l'IMEI (20) de l'objet communicant (2) par l'équipement mobile (1), puis envoi, vers des moyens (31) de traitement d'au moins un équipement opérateur (3), grâce aux moyens (11) de traitement de l'équipement mobile (1), d'une demande (46) de clonage d'un IMSI matrice (101) associé à la carte SIM (10) de l'équipement mobile (1), accompagnée de l'IMEI (20), sous forme cryptée (201), de l'objet communicant (2) auquel les données (104) doivent être affectées,
- réception de la demande (46) de clonage par les moyens (31) de traitement d'un équipement (3) opérateur, qui effectuent, par consultation de moyens (32) de mémorisation d'un équipement (3) opérateur, une authentification (47) de l'IMSI matrice (101) reçu et une authentification (48) de l'IMEI (20) de l'objet communicant (2).

2. Procédé selon la revendication 1, **caractérisé en ce que**, suite aux étapes d'authentification (47) de l'IMSI matrice (101) de l'équipement mobile (1) et d'authentification (48) de l'IMEI crypté (20) de l'objet communicant (2), lorsqu'au moins un identifiant, parmi l'IMSI (101) et l'IMEI (20), n'est pas authentifié, les moyens (31) de traitement d'un équipement opérateur (3) réalisent une étape d'envoi d'un message de refus du clonage vers les moyens (11) de traitement de l'équipement mobile (1) qui proposent alors au souscripteur d'abonnement un retour à l'étape de reconnaissance (40) mutuelle entre l'équipement mobile (1) et l'objet communicant (2).

3. Procédé selon la revendication 1, **caractérisé en ce que**, suite aux étapes d'authentification (47) de l'IMSI matrice (101) de l'équipement mobile (1) et d'authentification (48) de l'IMEI crypté (20) de l'objet communicant (2), lorsque l'IMSI (101) et l'IMEI (20) sont tous les deux authentifiés, le procédé se poursuit par les étapes suivantes:
- création (50), dans les moyens (32) de mémorisation d'un équipement opérateur (3), d'un IMSI clone (103) auquel sont associés l'IMEI (20) de l'objet communicant (2) et l'IMSI matrice (101) correspondant à la carte SIM (10) de l'équipement mobile (1), puis un envoi, vers l'équipement mobile (1), d'une autorisation (51) de copie des données (104) de sa carte SIM (10) dans des moyens (22) de mémorisation de l'objet communicant (2),
- réception de l'autorisation (51) de copie des données par l'équipement mobile (1), puis copie (52) et envoi (53) des données (104) de la carte SIM (10), par les moyens (11) de traitement de l'équipement mobile (1) vers les moyens (21) de traitement de l'objet communicant (2),
- réception des données (104) de la carte SIM (10), par les moyens (21) de traitement de l'objet communicant (2), puis enregistrement (54) de ces données (104) dans des moyens (22) de mémorisation de l'objet communicant (2).

4. Procédé selon une des revendications 1 à 3, **caractérisé en ce qu'**il comporte une étape préalable d'accord de l'opérateur, consistant en l'enregistrement, dans les moyens (32) de mémorisation d'au moins un équipement opérateur, d'une part, d'une pluralité d'IMSI virtuels (102), en attente d'affectation à un abonnement d'un souscripteur et, d'autre part, d'une pluralité de numéros de série IMEI (20) correspondant à des objets communicants (2) déclarés par les constructeurs d'objets communicants et autorisés par l'opérateur et d'une clé (201') de décryptage commune à tous les objets communicants déclarés, l'étape (48) d'authentification de l'IMEI (20) de l'objet communicant (2) consistant en un décryptage, grâce à la clé (201') de décryptage stockée, de l'IMEI (20) reçu et en sa comparaison avec la pluralité d'IMEI (20) stockée dans les moyens (32) de mémorisation d'un équipement opérateur (3), l'étape (50) de création d'un IMSI clone (103) auquel sont associés l'IMEI (20) de l'objet communicant (2) et l'IMSI matrice (101) consistant en une authentification (47) de l'IMSI matrice par consultation d'un centre (321) d'authentification, suivie d'une vérification (49) du profil (101') d'abonnement associé à l'IMSI matrice (101) pour déterminer si le clonage est autorisé, puis, le cas échéant, en une affectation (50) d'un des IMSI virtuels (102) comme clone (103) de l'IMSI matrice (101) du souscripteur d'abonnement dans les moyens (32) de mémorisation d'un équipement opérateur (3), puis en l'association de l'IMEI (20) de l'objet communicant (2) authentifié à cet IMSI virtuel devenu clone (103).

5. Procédé selon une des revendications 1 à 4, **caractérisé en ce qu'**au moins certaines étapes du procédé peuvent être contrôlées par le souscripteur d'abonnement, grâce à des moyens (13, 23) de saisie et d'affichage, présents dans l'équipement mobile (1) et dans l'objet communicant (2), permettant l'interactivité du souscripteur d'abonnement avec une application (110, 210) logicielle, exécutée sur les moyens (11, 21) de traitement de l'équipement mobile (1) et de l'objet communicant (2) pour permettre leur interopérabilité.

6. Procédé selon une des revendications 1 à 5, **caractérisé en ce que** l'étape de reconnaissance (40) mutuelle entre l'équipement mobile (1) et l'objet communicant (2) repose sur les protocoles de détection entre appareils munis de modules (14, 24) de liaison (30) locale sans fil, consistant en un balayage (scanning) de la zone d'influence d'un module (14) maître, à la recherche de modules (24) esclaves, et résulte en une détection de l'objet communicant (2) par l'équipement mobile (1), grâce à des modules respectifs de liaison (30) locale sans fil, respectivement en modes esclave (24) et maître (14), cette détection (40) étant suivie d'un envoi, par l'équipement mobile (1) vers l'objet communicant (2), d'une demande (41) de rapport sur l'état d'affectation de l'objet communicant (2) à un éventuel IMSI d'un souscripteur d'abonnement.

7. Procédé selon une des revendications 1 à 6, **caractérisé en ce que**, suite à l'étape de reconnaissance (40) mutuelle entre l'équipement mobile (1) et l'objet communicant (2), lorsque l'objet communicant (2) est affecté à un IMSI clone (103) ne correspondant pas à l'IMSI matrice (101) stocké dans l'équipement mobile (1), l'application logicielle (110) de l'équipement mobile (1) propose un retour à l'étape de reconnaissance (40) mutuelle entre l'équipement mobile (1) et l'objet communicant (2), de façon à empêcher toute modification de cette affectation à partir d'un équipement mobile (1) ne correspondant pas à l'IMSI matrice (101) du souscripteur d'abonnement auquel l'objet communicant (2) a été affecté au préalable.

8. Procédé selon une des revendications 1 à 7, **caractérisé en ce que**, suite à l'étape de reconnaissance (40) mutuelle entre l'équipement mobile (1) et l'objet communicant (2), lorsque l'objet communicant (2) est affecté à un IMSI clone (103) correspondant à l'IMSI matrice (101) stocké dans l'équipement mobile (1), l'application logicielle (110) de l'équipement mobile propose une étape de détachement de l'IMSI clone (103) de l'objet communicant (2), permettant la suppression, dans les moyens (22) de mémorisation de l'objet communicant (2), des données (104) copiées à partir de la carte SIM (10) du souscripteur d'abonnement.

9. Procédé selon une des revendications 1 à 8, **caractérisé en ce que**, suite à l'étape de reconnaissance (40) mutuelle entre l'équipement mobile (1) et l'objet communicant (2), lorsque l'objet communicant (2) n'est affecté à aucun IMSI matrice (101), l'application logicielle (110) propose une étape de confirmation (43) de l'affectation d'un IMSI clone (103) à l'objet communicant (2), cette confirmation résultant, le cas échéant, en l'envoi, par l'équipement mobile (1), d'une demande (44) de transmission de l'IMEI (20) de l'objet communicant (2), suivi d'une réponse de l'objet communicant (2) qui effectue l'envoi (45), sous forme cryptée, de l'IMEI (20) stocké dans ses moyens (22) de mémorisation, vers l'équipement mobile (1).

10. Procédé selon une des revendications 1 à 9, **caractérisé en ce que** l'étape d'enregistrement (54) des données (104) de la carte SIM (10) dans les moyens (22) de .mémorisation de l'objet communicant (2) est précédée d'une éventuelle étape de suppression des données éventuellement stockées au préalable dans ses moyens (22) de mémorisation.

11. Procédé selon une des revendications 1 à 10, **caractérisé en ce que** les étapes d'enregistrement (54) des données (104) de la carte SIM (10) dans les moyens (22) de mémorisation de l'objet communicant (2) et d'affectation (50) d'un IMSI clone (103) à l'objet communicant (2) permettent ensuite la mise en oeuvre des étapes standard d'authentification de l'objet communicant (2) sur le réseau (300) de l'opérateur, pour l'utilisation des communications autorisées pour l'abonnement du souscripteur.

12. Procédé selon une des revendications 1 à 11, **caractérisé en ce qu'**il comporte également une étape de mise à jour des données relatives à l'IMSI clone (103) dans les moyens (22) de mémorisation de l'objet communicant (2) du souscripteur d'abonnement, cette mise à jour consistant en une écriture, le cas échéant, des nouvelles données dans les moyens (22) de mémorisation de l'objet communicant (2), sous le contrôle des moyens (31) de traitement d'un équipement opérateur (3), suite aux étapes standard d'authentification de l'objet communicant (2) sur le réseau (300) de l'opérateur, lors de l'utilisation des communications autorisées pour l'abonnement du souscripteur.

13. Procédé selon une des revendications 1 à 12, **caractérisé en ce que** l'étape de mise à jour des données relatives à l'IMSI clone (103) dans les moyens (22) de mémorisation de l'objet communicant (2) du souscripteur d'abonnement peut également consister en une écriture des nouvelles données dans les moyens (22) de mémorisation de l'objet communicant, sous le contrôle des moyens (11) de traitement de l'équipement mobile (1) du souscripteur d'abonnement, suite à une nouvelle étape de reconnaissance (40) mutuelle entre l'équipement mobile (1) et l'objet communicant (2), initiée par le souscripteur d'abonnement.

14. Système de duplication sécurisée des informations d'une carte SIM (10) vers au moins un objet communicant (2), permettant la mise en oeuvre des étapes du procédé selon l'invention, comprenant un équipement mobile (1), relié à au moins un équipement opérateur (3) via un réseau (300) téléphonique sans fil et au moins un objet communicant (2) relié à l'équipement mobile (1) via une liaison (30) locale sans fil, grâce à la présence, dans ces dispositifs, de modules (14, 24, 34) de communication téléphonique sans fil et de modules (14, 24, 34) de communication par liaison locale sans fil, **caractérisé en ce que** l'équipement mobile (1) et l'objet communicant (2) comportent des moyens (12, 22) de mémorisation d'une application (110, 210) logicielle et des moyens (11, 21) de traitement exécutant cette application (110, 210), qui permet leur interopérabilité et leur interactivité avec un souscripteur d'abonnement, les moyens (21) de traitement de l'objet communicant (2) permettant, sur réception d'une demande d'IMEI envoyée par l'équipement mobile (1), le cryptage de l'IMEI (20) stocké dans ses moyens (22) de mémorisation, grâce à une clé (201) de cryptage stockée dans ses moyens (22) de mémorisation et l'envoi (42) crypté de cet IMEI (20) vers les moyens (11) de traitement de l'équipement mobile (1), ces moyens (11) de traitement de l'équipement mobile (1) permettant, en outre, l'association de l'IMEI (20) crypté de l'objet communicant (2) et de l'IMSI matrice (101), stocké dans la carte SIM (10) de l'équipement mobile (1), en une demande (46) de clonage des données (104) de la carte SIM (10) et l'envoi de cette demande (46) de clonage vers un équipement opérateur (3).

15. Système selon la revendication 14, **caractérisé en ce que** au moins un équipement opérateur (3) comporte des moyens (32) de mémorisation dans lesquels sont stockés, en outre, une pluralité d'IMEI (20) correspondant à des objets communicants (2) déclarés par les constructeurs d'objets communicants et autorisés par l'opérateur et une clé (201') de décryptage commune à tous les IMEI (20) déclarés, des moyens (31) de traitement d'un équipement opérateur (3) permettant, d'une part, une authentification (48) de l'IMEI (20) de l'objet communicant (2), reçu de l'équipement mobile (1) requérant le clonage des données (104) de sa carte SIM (10) et, d'autre part, une création (50) d'un IMSI clone (103), correspondant à une affectation d'une copie de l'IMSI matrice (101) de l'équipement mobile (1) à l'objet communicant (2) dont l'IMEI (20) a été reçu en association avec la demande (46) de clonage des données (104) de la carte SIM (10) de l'équipement mobile (1).

16. Système selon une des revendications 14 et 15, **caractérisé en ce que** les moyens (32) de mémorisation d'un équipement opérateur (3) comportent une pluralité d'IMSI virtuels (102), en attente d'affectation à un abonnement d'un souscripteur, des moyens (31) de traitement de l'équipement opérateur (3) permettant la création (50) d'un IMSI clone (103), lors d'une demande (46) de clonage des données (104) de la carte SIM (10) d'un équipement mobile (1), correspondant, d'une part, à une transformation d'un de ces IMSI virtuels (102) en un IMSI clone (103), copié à partir de l'IMSI matrice (101) de l'équipement mobile (1) requérant et, d'autre part, à une association de l'IMEI (20) de l'objet communicant (2) affecté à cet IMSI clone (103).

17. Système selon une des revendications 14 à 16, **caractérisé en ce que** les moyens (11, 21) de traitement de l'équipement mobile (1) et de l'objet communicant (2) autorisent le contrôle des moyens (22) de mémorisation de l'objet communicant (2) par l'équipement mobile (1) et permettent l'enregistrement (54) d'une copie des données (104) de la carte SIM (10) de l'équipement mobile (1) dans les moyens (22) de mémorisation de l'objet communicant (2).

18. Système selon une des revendications 14 à 17, **caractérisé en ce que** des moyens (31) de traitement d'un équipement opérateur (3) réalisent la vérification (48) de l'intégrité de l'IMEI (20) reçu de l'équipement mobile (1) requérant le clonage des données (104) de sa carte SIM (10) dans un objet communicant (2) identifié par cet IMEI, grâce, d'une part, à des moyens de décryptage de cet IMEI (20) reçu, à l'aide de la clé (201') de décryptage stockée dans les moyens (32) de mémorisation d'un équipement opérateur (3), et, d'autre part, à des moyens de comparaison de cet IMEI (20) décrypté avec la pluralité d'IMEI (20) stockée dans les moyens (32) de mémorisation d'au moins un équipement opérateur (3).

19. Système selon une des revendications 14 à 18, **caractérisé en ce que** les moyens (31) de traitement d'au moins un équipement opérateur (3) comportent des moyens de réaliser automatiquement la mise à jour des données (104) relatives à l'IMSI clone (103), en cas de changement des données (104) de la carte SIM (10) de l'équipement mobile (1) et des moyens d'enregistrer directement les nouvelles données, via un réseau (300) téléphonique sans fil, dans les moyens (22) de mémorisation de l'objet communicant (2), grâce aux moyens (21) de traitement de l'objet communicant (2) qui autorisent cet enregistrement.

20. Système selon une des revendications 14 à 19, **caractérisé en ce que** les moyens (11) de traitement de l'équipement mobile (1) comportent des moyens de réaliser automatiquement la mise à jour des données (104) relatives à l'IMSI clone (103), en cas de changement des données (104) de la carte SIM (10) de l'équipement mobile (1) et des moyens d'enregistrer directement les nouvelles données, via un réseau (300) téléphonique sans fil ou via une liaison (30) locale sans fil, dans les moyens (22) de mémorisation de l'objet communicant (2), grâce aux moyens (21) de traitement de l'objet communicant (2) qui autorisent cet enregistrement.

21. Système selon une des revendications 14 à 20, **caractérisé en ce que** les moyens (21) de traitement de l'objet communicant (2) auquel a été affecté un IMSI clone (103) exécutent une application permettant, à partir des données (104) enregistrées dans ses moyens (22) de mémorisation, l'utilisation de l'abonnement du souscripteur.

22. Système selon une des revendications 14 à 21, **caractérisé en ce que** la pluralité d'IMEI (20) stockée dans les moyens (32) de mémorisation d'un équipement opérateur (3) est associée à des informations permettant la gestion des IMEI (20) des objets communicants (2) volés ou perdus et les moyens (31) de traitement d'au moins un équipement opérateur (3) interdisent, le cas échéant, toute association d'un IMEI (20) déclaré volé ou perdu avec un IMSI clone (103) requis par un équipement mobile (1).

23. Système selon une des revendications 14 à 22, **caractérisé en ce que** les modules (14, 24, 34) de communication par liaison (30) locale sans fil, présents dans l'équipement mobile (1), l'objet communicant (2) et un équipement opérateur (3), sont des modules émetteur/récepteur Bluetooth®.

24. Système selon une des revendications 14 à 23, **caractérisé en ce que** les modules (14, 24, 34) de communication par un réseau (300) téléphonique sans fil, présents dans l'équipement mobile (1), l'objet communicant (2) et l'équipement opérateur (3), sont compatibles avec les réseaux GSM/DCS et UMTS.

## Claims

1. Method of secure duplication of at least part of the data from a SIM card (10) to at least one communicating object which is in communication with a mobile device (1) via a local wireless connection (30), **characterised in that** it is implemented by a mobile device (1), at least one operating device (3) and at least one communicating object (2) which are connected to one another via a wireless telephone network (300) and/or via a local wireless connection (30), and **in that** it includes the following steps:
- mutual recognition (40) between the mobile device (1) and the communicating object (2), then transmission (45) in encrypted form of the IMEI serial number (20) stored in storage means (22) of the communicating object (2) by processing means (21) of the communicating object (2) to processing means (11) of the mobile device (1),
- reception of the IMEI (20) of the communicating object (2) by the mobile device (1), then transmission to the processing means (31) of at least one operating device (3) by the processing means (11) of the mobile device (1) of a request (46) for cloning of an IMSI template (101) associated with the SIM card (10) of the mobile device (1), accompanied by the IMEI (20) in encrypted form (201) of the communicating object (2) to which the data (104) are to be assigned,
- reception of the cloning request (46) by the processing means (31) of an operating device (3) which by consultation of storage means (32) of an operating device (3) effect an authentication (47) of the received IMSI template (101) and an authentication (48) of the IMEI (20) of the communicating object (2).

2. Method as claimed in Claim 1, **characterised in that** following the steps of authentication (47) of the IMSI template (101) of the mobile device (1) and authentication (48) of the encrypted IMEI (20) of the communicating object (2), when at least one identifier amongst the IMSI (101) and the IMEI (20) is not authenticated, the processing means (31) of an operating device (3) carry out a step of transmission of a message for refusal of cloning to the processing means (11) of the mobile device (1) which then suggest to the subscriber a return to the step of mutual recognition (40) between the mobile device (1) and the communicating object (2).

3. Method as claimed in Claim 1, **characterised in that**, following the steps of authentication 47) of the IMSI template (101) of the mobile device (1) and authentication (48) of the encrypted IMEI (20) of the communicating object (2), when the IMSI (101) and the IMEI (20) are both authenticated, the method continues with the following steps:
- creation (50), in the storage means (32) of an operating device (3), of an IMSI clone (103) with which are associated the IMEI (20) of the communicating object (2) and the IMSI template (101) corresponding to the SIM card (10) of the mobile device (1), then transmission to the mobile device (1) of an authorisation (51) for copying data (104) from its SIM card (10) into storage means (22) of the communicating object (2),
- reception of the authorisation (51) for copying the data by the mobile device (1), then copying (52) and transmission (53) of the data (104) from the SIM card (10) by the processing means (11) of the mobile device (1) to the processing means (21) of the communicating object (2),
- reception of the data (104) from the SIM card (10) by the processing means (21) of the communicating object (2), then recording (54) of these data (104) in storage means (22) of the communicating object (2).

4. Method as claimed in any one of Claims 1 to 3, **characterised in that** it includes a prior step of consent by the operator, consisting of recording in the storage means (32) of at least one operating device of on the one hand a plurality of virtual IMSIs (102) awaiting assignment to a subscription of a subscriber and on the other hand a plurality of IMEI serial numbers (20) corresponding to communicating objects (2) declared by the manufacturers of communicating objects and authorised by the operator, and a decryption key (201') common to all the declared communicating objects, the step (48) of authentication of the IMEI (20) of the communicating object (2) consisting of decryption of the received IMEI (20) by means of the stored decryption key (201') and comparison thereof with the plurality of IMEIs (20) stored in the storage means (32) of an operating device, wherein the step (50) of creation of an IMSI clone (103) with which are associated the IMEI (20) of the communicating object (2) and the template IMSI (101) consists of an authentication (47) of the IMSI template by consultation of an authentication centre (321), followed by verification (49) of the subscription profile (101') associated with the IMSI template (101) in order to determine whether the cloning is authorised, then consisting if need be of an assignment of one of the virtual IMSIs (102) as a clone (103) of the IMSI template (101) of the subscription subscriber in the storage means (32) of an operating device (3), then the association of the IMEI (20) of the authenticated communicating object (2) with this virtual IMSI which has become a clone (103).

5. Method as claimed in any one of Claims 1 to 4, **characterised in that** at least certain steps of the method may be controlled by the subscription subscriber by way of input and display means (13, 23) which are present in the mobile device (1) and in the communicating object (2) and enable the interactivity of the subscription subscriber with a software application (110, 210) executed on the processing means (11, 21) of the mobile device and of the communicating object (2) in order to enable their interoperability.

6. Method as claimed in any one of Claims 1 to 5, **characterised in that** the step of mutual recognition (40) between the mobile device (1) and the communicating object (2) is based on the detection protocols between devices equipped with local wireless connection (30) modules (14, 24) consisting of scanning of the zone of influence of a master module (14) for seeking slave modules and resulting in detection of the communicating object (2) by the mobile device (1) by way of respective wireless local connection (30) modules in slave (24) and master (14) modes respectively, this detection (40) being followed by transmission by the mobile device (1) to the communicating object (2) of a request (41) for a report on the assignment status of the communicating object (2) to a possible IMSI of a subscription subscriber.

7. Method as claimed in any one of Claims 1 to 6, **characterised in that**, following the step of mutual recognition (40) between the mobile device (1) and the communicating object (2), when the communicating object (2) is assigned to an IMSI clone (103) which does not correspond to the IMSI template (101) stored in the mobile device (1) the software application (110) of the mobile device (1) suggests a return to the step of mutual recognition (40) between the mobile device (1) and the communicating object (2) in such a way as to prevent any modification to this assignment from a mobile device (1) which does not correspond to the IMSI template (101) of the subscription subscriber to which the communicating object (2) has previously been assigned

8. Method as claimed in any one of Claims 1 to 7, **characterised in that** following the step of mutual recognition (40) between the mobile device (1) and the communicating object (2), when the communicating object (2) is assigned to an IMSI clone (103) corresponding to the IMSI template (101) stored in the mobile device (1) the software application (110) of the mobile device suggests a step of detachment of the IMSI clone (103) from the communicating object (2), enabling the deletion in the storage means (22) of the communicating object (2) of the data (104) copied from the SIM card (10) of the subscription subscriber.

9. Method as claimed in any one of Claims 1 to 8, **characterised in that** following the step of mutual identification (40) between the mobile device (1) and the communicating object (2) when the communicating object (2) is not assigned to any IMSI template (101), the software application (110) proposes a step of confirmation (43) of the assignment of an IMSI clone (103) to the communicating object (2), this confirmation resulting if need be in the transmission by the mobile device (1) of a request (44) for transmission of the IMEI (20) of the communicating object (2), followed by a response from the communicating object (2) which effects the transmission (45) in encrypted form of the IMEI (20) stored in its storage means (22) to the mobile device (1).

10. Method as claimed in any one of Claims 1 to 9, **characterised in that** the step of recording (54) of the data (104) from the SIM card (10) into the storage means (22) of the communicating object (2) is preceded by a possible step for deletion of the data possibly stored previously in its storage means (22).

11. Method as claimed in any one of Claims 1 to 10, **characterised in that** the steps of recording (54) of the data (104) from the SIM card (10) into the storage means (22) of the communicating object (2) and of assignment (50) of an IMSI clone (103) to the communicating object (2) then enable the implementation of the standard steps for authentication of the communicating object (2) over the operator's network (300) for the use of the communications authorised for the subscriber's subscription.

12. Method as claimed in any one of Claims 1 to 11, **characterised in that** it also includes a step of updating the data relating to the IMSI clone (103) in the storage means (22) of the communicating object (2) of the subscription subscriber, wherein this updating consists, if need be, of writing new data into the storage means (22) of the communicating object (2) under the control of the processing means (31) of an operating device (3) following the standard steps for authentication of the communicating object (2) on the network (300) of the operator during use of the communications authorised for the subscriber's subscription.

13. Method as claimed in any one of Claims 1 to 12, **characterised in that** the step of updating the data relating to the IMSI clone (103) in the storage means (22) of the communicating object (2) of the subscription subscriber may also consist of writing new data into the storage means (22) of the communicating object under the control of the processing means (11) of the mobile device (1) of the subscription subscriber following a new step of mutual recognition (40) between the mobile device (1) and the communicating object (2) initiated by the subscription subscriber.

14. System of secure duplication of data from a SIM card (10) to at least one communicating object (2), enabling the implementation of the steps of the method according to the invention, comprising a mobile device (1), connected to at least one operating device (3) via a wireless telephone network (300) and at least one communicating object (2) connected to the mobile device (1) via a local wireless connection, due to the presence in these devices of wireless telephone communications modules (14, 24, 34) and of wireless local link communication modules (14, 24, 34), **characterised in that** the mobile device (1) and the communicating object (2) include means (12, 22) for storage of a software application (110, 210) and processing means (11, 21) which execute this application (110, 210), which enable their interoperability and their interactivity with a subscription subscriber, wherein upon reception of an IMEI request sent by the mobile device (1) the processing means (21) of the communicating object (2) enables the encryption of the IMEI (20) stored in its storage means (22) by means of an encryption key (201) stored in its storage means and the encrypted transmission of this IMEI (20) to the processing means (11) of the mobile device (1), these processing means (11) of the mobile device (1) further enabling the association of the encrypted IMEI (20) of the communicating object (2) and of the IMSI template (101) stored in the SIM card (10) of the mobile device (1) into a request (46) for cloning of the data (104) from the SIM card (10) and the transmission of this cloning request (46) to an operating device (3).

15. System as claimed in Claim 14, **characterised in that** at least one operating device (3) includes storage means (32) in which are also stored a plurality of IMEIs (20) corresponding to communicating objects (2) declared by the manufacturers of communicating objects and authorised by the operator and a decryption key common to all the declared IMEIs (20), wherein processing means (31) of an operating device (3) enables on the one hand authentication (48) of the IMEI (20) of the communicating object (2) received from the mobile device (1) requesting the cloning of the data (104) of its SIM card (10) and on the other hand creation (50) of an IMSI clone (103) corresponding to an assignment of a copy of the IMSI template (101) of the mobile device (1) to the communicating object (2) of which the IMEI (20) has been received in association with the request (46) for cloning of the data (104) of the SIM card (10) of the mobile device (1).

16. System as claimed in any one of Claims 14 and 15, **characterised in that** the storage means (32) of an operating device (3) include a plurality of virtual IMSIs (102) awaiting assignment to a subscription of a subscriber, wherein processing means (31) of the operating device (3) enables the creation (50) of an IMSI clone (103) during a request for cloning of the data (104) of the SIM card (10) of a mobile device (1) corresponding on the one hand to a transformation of one of these virtual IMSIs (102) into an IMSI clone (103) copied from the IMSI template (101) of the requesting mobile device (1) and on the other hand to an association of the IMEI (20) of the communicating object (2) assigned to this IMSI clone (103).

17. System as claimed in any one of Claims 14 to 16, **characterised in that** the processing means (11, 21) of the mobile device (1) and of the communicating object (2) authorise control of the storage means (22) of the communicating object (2) by the mobile device (1) and enable the recording (54) of a copy of the data (104) from the SIM card (10) of the mobile device (1) into the storage means (22) of the communicating object (2).

18. System as claimed in any one of Claims 14 to 17, **characterised in that** processing means (31) of an operating device (3) perform the verification (48) of the integrity of the IMEI (20) received from the mobile device (1) requesting the cloning of the data (104) from its SIM card (10) in a communicating object (2) identified by this IMEI, on the one hand by means for decryption of this received IMEI (20) with the aid of the decryption key (201') stored in the storage means (32) of an operating device (3) and on the other hand by means for comparison of this decrypted IMEI (20) with the plurality of IMEIs (20) stored in the storage means (32) of at least one operating device (3).

19. System as claimed in any one of Claims 14 to 18, **characterised in that** the processing means (31) of at least one operating device (3) include means for automatically performing the updating of the data (104) relating to the IMSI clone (103) in the event of a change in the data (104) of the SIM card (10) of the mobile device (1) and means for directly recording the new data via a wireless telephone network (300) into the storage means (22) of the communicating object (2) by the processing means (21) of the communicating object which authorise this recording.

20. System as claimed in any one of Claims 14 to 19, **characterised in that** the processing means (11) of the mobile device (1) include means for automatically performing the updating of the data (104) relating to the IMSI clone (103) in the event of a change in the data (104) of the SIM card (10) of the mobile device (1) and means for directly recording the new data via a wireless telephone network (300) or via a local wireless connection (30) into the storage means (22) of the communicating object (2) by the processing means (21) of the communicating object (2) which authorise this recording.

21. System as claimed in any one of Claims 14 to 20, **characterised in that** the processing means (21) of the communicating object (2) to which an IMSI clone (103) has been assigned execute an application which enables the use of the subscription of the subscriber from the data (104) recorded in its storage means (22).

22. System as claimed in any one of Claims 14 to 21, **characterised in that** the plurality of IMEIs (20) stored in the storage means (32) of an operating device (3) is associated with data which enable the management of the IMEIs (20) of stolen or lost communicating objects (2) and the processing means (31) of at least one operating device (3) prevent, if need be, any association of an IMEI (20) declared stolen or lost with an IMSI clone (103) required by a mobile device (1).

23. System as claimed in any one of Claims 14 to 22, **characterised in that** the local wireless communication modules (14, 24, 34) present in the mobile device (1), the communicating object (2) and an operating device (3) are Bluetooth® transmitter/receiver modules.

24. System as claimed in any one of Claims 14 to 23, **characterised in that** the wireless telephone communication network modules (14, 24, 34) present in the mobile device (1), the communicating object (2) and the operating device (1) are compatible with the GSM/DCS and UMTS networks.

## Patentansprüche

1. Verfahren für das gesicherte Duplizieren von zumindest einem Teil der Informationen einer SIM-Karte (10) auf mindestens ein Kommunikationsobjekt (2), das über eine lokale drahtlose Verbindung (30) mit einer mobilen Einrichtung (1) kommuniziert, **dadurch gekennzeichnet, dass** es mittels einer mobilen Einrichtung (1), mindestens einer Betreiber-Einrichtung (3) und mindestens einem Kommunikationsobjekt (2) durchgeführt wird, die über ein drahtloses Telefonnetzwerk (300) und/oder über eine lokale drahtlose Verbindung (30) miteinander verbunden sind, und **dadurch**, dass es die folgenden Schritte aufweist:
- gegenseitiges Erkennen (40) der mobilen Einrichtung (1) und des Kommunikationsobjektes (2), anschließend Versenden (45) in verschlüsselter Form (201) der IMEI-Seriennummer (20) [IMEI, engl. International Mobile Equipment Identity (internationale Mobilfunkgerätekennung)], die in Speichermitteln (22) des Kommunikationsobjektes (2) gespeichert ist, mittels Verarbeitungsmitteln (21) des Kommunikationsobjektes (2) an Verarbeitungsmittel (11) der mobilen Einrichtung (1),
- Empfangen der IMEI (20) des Kommunikationsobjektes (2) durch die mobile Einrichtung (1), dann Versenden, mit Hilfe der Verarbeitungsmittel (11) der mobilen Einrichtung (1), einer Anfrage (46) zum Klonen einer IMSI-Matrix (101) [IMSI, engl. International Mobile Subscriber Identity (internationale Mobilfunk-Teilnehmerkennung)], die mit der SIM-Karte (10) der mobilen Einrichtung (1) verknüpft ist, zusammen mit der IMEI (20) des Kommunikationsobjektes (2), dem die Daten (104) zuzuordnen sind, in verschlüsselter Form (201), an Verarbeitungsmittel (31) mindestens einer Betreiber-Einrichtung (3),
- Empfangen der Klon-Anfrage (46) durch die Verarbeitungsmittel (31) einer Betreiber-Einrichtung (3), die durch Abfragen von Speichermitteln (32) einer Betreiber-Einrichtung (3) eine Authentifizierung (47) der empfangenen IMSI-Matrix (101) und eine Authentifizierung (48) der IMEI (20) des Kommunikationsobjektes (2) durchführen.

2. Verfahren gemäß Anspruch 1, **dadurch gekennzeichnet, dass** im Anschluss an die Schritte der Authentifizierung (47) der IMSI-Matrix (101) der mobilen Einrichtung (1) und der Authentifizierung (48) der verschlüsselten IMEI (20) des Kommunikationsobjektes (2), wenn mindestens ein Identifizierer aus der IMSI (101) und der IMEI (20) nicht authentifiziert wird, die Verarbeitungsmittel (31) einer Betreiber-Einrichtung (3) einen Schritt des Versendens einer Klon-Verweigerungsnachricht an die Verarbeitungsmittel (11) der mobilen Einrichtung (1) durchführen, die dann dem Vertragsteilnehmer eine Rückkehr zu dem Schritt des gegenseitigen Erkennens (40) der mobilen Einrichtung (1) und des Kommunikationsobjektes (2) vorschlagen.

3. Verfahren gemäß Anspruch 1, **dadurch gekennzeichnet, dass** im Anschluss an die Schritte der Authentifizierung (47) der IMSI-Matrix (101) der mobilen Einrichtung (1) und der Authentifizierung (48) der verschlüsselten IMEI (20) des Kommunikationsobjektes (2), wenn sowohl die IMSI (101) als auch die IMEI (20) authentifiziert sind, das Verfahren mittels der folgenden Schritte fortgesetzt wird:
- Erzeugen (50) eines IMSI-Klons (103), mit dem die IMEI (20) des Kommunikationsobjektes (2) und die IMSI-Matrix (101), die der SIM-Karte (10) der mobilen Einrichtung (1) entspricht, verknüpft sind, in den Speichermitteln (32) einer Betreiber-Einrichtung (3), dann Versenden einer Autorisierung (51) zum Kopieren der Daten (104) der SIM-Karte (10) in Speichermittel (22) des Kommunikationsobjektes (2) an die mobile Einrichtung (1),
- Empfangen der Autorisierung (51) zum Kopieren der Daten durch die mobile Einrichtung (1), dann Kopieren (52) und Versenden (53) der Daten (104) der SIM-Karte (10) mittels der Verarbeitungsmittel (11) der mobilen Einrichtung (1) an die Verarbeitungsmittel (21) des Kommunikationsobjektes (2),
- Empfangen der Daten (104) der SIM-Karte (10) mittels der Verarbeitungsmittel (21) des Kommunikationsobjektes (2), anschließend Speichern (54) der Daten (104) in Speichermitteln (22) des Kommunikationsobjektes (2).

4. Verfahren gemäß einem der Ansprüche 1 bis 3, **dadurch gekennzeichnet, dass** es einen vorangehenden Schritt der Zustimmung des Betreibers aufweist, bestehend aus dem Speichern in den Speichermitteln (32) von mindestens einer Betreiber-Einrichtung von einerseits einer Mehrzahl von virtuellen IMSIs (102) in Erwartung der Zuordnung zu einem Vertrag eines Teilnehmers und andererseits aus einer Mehrzahl von IMEI-Seriennummern (20), die Kommunikationsobjekten (2) entsprechen, die von den Herstellern von Kommunikationsobjekten angegeben und von dem Betreiber autorisiert werden, und einem Entschlüsselungsschlüssel (201'), der allen angegebenen Kommunikationsobjekten gemeinsam ist, wobei der Schritt (48) der Authentifizierung der IMEI (20) des Kommunikationsobjektes (2) aus einer Entschlüsselung mit Hilfe des gespeicherten Entschlüsselungsschlüssels (201') der empfangenen IMEI (20) und aus deren Vergleich mit der Mehrzahl von IMEIs (20) besteht, die in den Speichermitteln (32) einer Betreiber-Einrichtung (3) gespeichert sind, wobei der Schritt (50) des Erzeugens eines IMSI-Klons (103), mit welchem die IMEI (20) des Kommunikationsobjektes (2) und die IMSI-Matrix verknüpft sind, aus einem Authentifizieren (47) der IMSI-Matrix mittels Abfragens eines Authentifizierungs-Zentrums (321), gefolgt von einem Verifizieren (49) des Teilnehmerprofils (101'), das zum Ermitteln, ob das Klonen autorisiert ist, mit der IMSI-Matrix (101) verknüpft ist, anschließend gegebenenfalls aus einem Zuordnen (50) einer der virtuellen IMSIs (102) als Klon (103) der IMSI-Matrix (101) des Vertragsteilnehmers in den Speichermitteln (32) einer Betreiber-Einrichtung (3), und anschließend dem Verknüpfen der authentifizierten IMEI (20) des Kommunikationsobjektes (2) mit der zum Klon (103) gewordenen virtuellen IMSI besteht.

5. Verfahren gemäß einem der Ansprüche 1 bis 4, **dadurch gekennzeichnet, dass** zumindest bestimmte Schritte des Verfahrens mit Hilfe von Eingabe- und Anzeigemitteln (13, 23), die sich in der mobilen Einrichtung (1) und in dem Kommunikationsobjekt (2) befinden, von dem Vertragsteilnehmer gesteuert werden können, wodurch die Interaktivität des Vertragsteilnehmers mit einer Software-Anwendung (110, 210) ermöglicht wird, die auf den Verarbeitungsmitteln (11, 21) der mobilen Einrichtung (1) und des Kommunikationsobjektes (2) zum Ermöglichen ihrer Interoperabilität ausgeführt wird.

6. Verfahren gemäß einem der Ansprüche 1 bis 5, **dadurch gekennzeichnet, dass** der Schritt des gegenseitigen Erkennens (40) der mobilen Einrichtung (1) und des Kommunikationsobjektes (2) auf Protokollen zur Detektion zwischen Vorrichtungen beruht, die mit Modulen (14, 24) zur lokalen drahtlosen Verbindung (30) ausgestattet sind, bestehend aus einem Abtasten (Scannen) des Einflussbereichs eines Master-Moduls (14) auf der Suche nach Slave-Modulen (24), und zu einer Detektion des Kommunikationsobjektes (2) durch die mobile Einrichtung (1) mit Hilfe von entsprechenden Modulen zur lokalen drahtlosen Verbindung führt, wobei diese im Slave-Modus (24) beziehungsweise im Master-Modus (14) sind, wobei auf die Detektion (40) ein Versenden an das Kommunikationsobjekt (2) mittels der mobilen Einrichtung (1) einer Anfrage (41) nach einem Bericht über den Zuordnungsstatus des Kommunikationsobjektes (2) zu einer möglichen IMSI eines Vertragsteilnehmers folgt.

7. Verfahren gemäß einem der Ansprüche 1 bis 6, **dadurch gekennzeichnet, dass** im Anschluss an den Schritt des gemeinsamen Erkennens (40) der mobilen Einrichtung (1) und des Kommunikationsobjektes (2), wenn das Kommunikationsobjekt (2) einem IMSI-Klon (103) zugeordnet ist, der nicht der IMSI-Matrix (101) entspricht, die in der mobilen Einrichtung (1) gespeichert ist, die Software-Anwendung (110) der mobilen Einrichtung (1) eine Rückkehr zu dem Schritt des gegenseitigen Erkennens (40) der mobilen Einrichtung (1) und des Kommunikationsobjektes (2) vorschlägt, so dass jede Modifizierung der Zuordnung ausgehend von einer mobilen Einrichtung (1), die nicht der IMSI-Matrix (101) des Vertragsteilnehmers entspricht, der das Kommunikationsobjekt (2) zuvor zugeordnet wurde, verhindert wird.

8. Verfahren gemäß einem der Ansprüche 1 bis 7, **dadurch gekennzeichnet, dass** im Anschluss an den Schritt des gegenseitigen Erkennens (40) der mobilen Einrichtung (1) und des Kommunikationsobjektes (2), wenn das Kommunikationsobjekt (2) einem IMSI-Klon (103) zugeordnet ist, der der IMSI-Matrix (101) entspricht, die in dem mobilen Endgerät (1) gespeichert ist, die Software-Anwendung (110) der mobilen Einrichtung einen Schritt des Trennens des IMSI-Klons (103) von dem Kommunikationsobjekt (2) vorschlägt, wodurch das Löschen der Daten (104) in den Speichermitteln (22) des Kommunikationsobjektes (2) ermöglicht wird, die von der SIM-Karte (10) des Vertragsteilnehmers kopiert wurden.

9. Verfahren gemäß einem der Ansprüche 1 bis 8, **dadurch gekennzeichnet, dass** nach dem Schritt des gegenseitigen Erkennens (40) der mobilen Einrichtung (1) und des Kommunikationsobjektes (2), wenn das Kommunikationsobjekt (2) keiner IMSI-Matrix (101) zugeordnet ist, die Software-Anwendung (110) einen Schritt des Bestätigens (43) der Zuordnung eines IMSI-Klons (103) zu dem Kommunikationsobjekt (2) vorschlägt, wobei die Bestätigung gegebenenfalls zum Versenden durch die mobile Einrichtung (1) einer Anfrage (44) zur Übertragung der IMEI (20) des Kommunikationsobjektes (2) führt, gefolgt von einer Antwort des Kommunikationsobjektes (2), welches das Versenden (45) der in seinen Speichermitteln (22) gespeicherten IMEI (20) in verschlüsselter Form an die mobile Einrichtung (1) durchführt.

10. Verfahren gemäß einem der Ansprüche 1 bis 9, **dadurch gekennzeichnet, dass** dem Schritt des Speicherns (54) der Daten (104) der SIM-Karte (10) in den Speichermitteln (22) des Kommunikationsobjektes (2) ein möglicher Schritt des Löschens der Daten vorausgeht, die möglicherweise zuvor in seinen Speichermitteln (22) gespeichert wurden.

11. Verfahren gemäß einem der Ansprüche 1 bis 10, **dadurch gekennzeichnet, dass** die Schritte des Speicherns (54) der Daten (104) der SIM-Karte (10) in den Speichermitteln (22) des Kommunikationsobjektes (2) und des Zuordnens (50) eines IMSI-Klons (103) zu dem Kommunikationsobjekt (2) anschließend das Durchführen der Standard-Authentifizierungsschritte des Kommunikationsobjektes (2) in dem Netzwerk (300) des Betreibers für die Nutzung der für den Vertrag des Teilnehmers autorisierten Übermittlungen ermöglichen.

12. Verfahren gemäß einem der Ansprüche 1 bis 11, **dadurch gekennzeichnet, dass** es ferner einen Schritt des Aktualisierens der Daten in Bezug auf den IMSI-Klon (103) in den Speichermitteln (22) des Kommunikationsobjektes (2) des Vertragsteilnehmers aufweist, wobei die Aktualisierung im gegebenen Fall aus dem Schreiben der neuen Daten in die Speichermittel (22) des Kommunikationsobjektes (2) unter der Steuerung der Verarbeitungsmittel (31) einer Betreiber-Einrichtung (3) im Anschluss an die Standard-Authentifizierungsschritte des Kommunikationsobjektes (2) im Netzwerk (300) des Betreibers bei der Nutzung der für den Vertrag des Teilnehmers autorisierten Übertragungen besteht.

13. Verfahren gemäß einem der Ansprüche 1 bis 12, **dadurch gekennzeichnet, dass** der Schritt des Aktualisierens der Daten in Bezug auf den IMSI-Klon (103) in den Speichermitteln (22) des Kommunikationsobjektes (2) des Vertragsteilnehmers auch aus einem Schreiben der neuen Daten in die Speichermittel (22) des Kommunikationsobjektes unter der Steuerung der Verarbeitungsmittel (11) des mobilen Endgerätes (1) des Vertragsteilnehmers im Anschluss an einen neuen Schritt des gegenseitigen Erkennens (40) der mobilen Einrichtung (1) und des Kommunikationsobjektes (2), bestehen kann, der von dem Vertragsteilnehmer initiiert wird.

14. System zum gesicherten Duplizieren der Informationen einer SIM-Karte (10) auf mindestens ein Kommunikationsobjekt (2), welches das Durchführen der Schritte des Verfahrens gemäß der Erfindung ermöglicht, aufweisend eine mobile Einrichtung (1), die über ein drahtloses Telefonnetzwerk (300) mit mindestens einer Betreiber-Einrichtung (3) verknüpft ist, und mindestens ein Kommunikationsobjekt (2), das über eine lokale drahtlose Verbindung (30) mit der mobilen Einrichtung (1) verbunden ist, mit Hilfe der Anwesenheit von Modulen (14, 24, 34) für die drahtlose Telefonkommunikation, und von Modulen (14, 24, 34) für die Kommunikation mittels einer lokalen drahtlosen Verbindung in den Einrichtungen, **dadurch gekennzeichnet, dass** die mobile Einrichtung (1) und das Kommunikationsobjekt (2) Mittel (12, 22) zum Speichern einer Software-Anwendung (110, 210) und die Anwendung (110, 210) ausführende Verarbeitungsmittel (11, 21) aufweisen, wodurch deren Interoperabilität und Interaktivität mit einem Vertragsteilnehmer ermöglicht wird, wobei die Verarbeitungsmittel (21) des Kommunikationsobjektes (2) bei Empfang einer von der mobilen Einrichtung (1) gesendeten IMEI-Anfrage das Verschlüsseln der in seinen Speichermitteln (22) gespeicherten IMEIs (20) mit Hilfe eines in seinen Speichermitteln (22) gespeicherten Verschlüsselungsschlüssels (201) und das verschlüsselte Versenden (42) der IMEI (20) an die Verarbeitungsmittel (11) der mobilen Einrichtung (1) ermöglichen, wobei die Verarbeitungsmittel (11) der mobilen Einrichtung (1) ferner das Verknüpfen der verschlüsselten IMEI (20) des Kommunikationsobjektes (2) und der IMSI-Matrix (101), die in der SIM-Karte (10) der mobilen Einrichtung (1) gespeichert ist, bei einer Anfrage (46) zum Klonen der Daten (104) der SIM-Karte (10), und das Versenden der Klon-Anfrage (46) an eine Betreiber-Einrichtung (3) ermöglichen.

15. System gemäß Anspruch 14, **dadurch gekennzeichnet, dass** mindestens eine Betreiber-Einrichtung (3) aufweist: Speichermittel (32), in denen ferner eine Mehrzahl von IMEIs (20), die Kommunikationsobjekten (2) entsprechen, die von den Herstellern von Kommunikationsobjekten angegeben und durch den Betreiber autorisiert sind, und ein Entschlüsselungsschlüssel (201'), der allen angegebenen IMEIs (20) gemeinsam ist, gespeichert sind, wobei Verarbeitungsmittel (31) einer Betreiber-Einrichtung (3) folgendes ermöglichen: einerseits eine Authentifizierung (48) der IMEI (20) des Kommunikationsobjektes (2), die von der mobilen Einrichtung (1) empfangen wird, die das Klonen der Daten (104) ihrer SIM-Karte (10) fordert, und andererseits ein Erzeugen (50) eines IMSI-Klons (103), wobei dies einer Zuordnung einer Kopie der IMSI-Matrix (101) der mobilen Einrichtung (1) zu dem Kommunikationsobjekt (2) entspricht, dessen IMEI (20) in Verbindung mit der Klon-Anfrage (46) der Daten (104) der SIM-Karte (10) der mobilen Einrichtung (1) empfangen wurde.

16. System gemäß einem der Ansprüche 14 und 15, **dadurch gekennzeichnet, dass** die Speichermittel (32) einer Betreiber-Einrichtung (3) eine Mehrzahl von virtuellen IMSIs (102) in Erwartung der Zuordnung zu einem Vertrag eines Teilnehmers aufweisen, wobei Verarbeitungsmittel (31) der Betreiber-Einrichtung (3) das Erzeugen (50) eines IMSI-Klons (103) bei einer Anfrage (46) zum Klonen der Daten (104) der SIM-Karte (10) einer mobilen Einrichtung (1) ermöglichen, wobei dies einerseits einer Umwandlung von einer der virtuellen IMSIs (102) in einen IMSI-Klon (103), der ausgehend von der IMSI-Matrix (101) der anfordernden mobilen Einrichtung (1) kopiert wird, und andererseits einer Verknüpfung der IMEI (20) des Kommunikationsobjektes (2)mit dem IMSI-Klon (103) entspricht.

17. System gemäß einem der Ansprüche 14 bis 16, **dadurch gekennzeichnet, dass** die Verarbeitungsmittel (11, 21) der mobilen Einrichtung (1) und des Kommunikationsobjektes (2) die Steuerung der Speichermittel (22) des Kommunikationsobjektes (2) durch die mobile Einrichtung (1) autorisieren und das Speichern (54) einer Kopie der Daten (104) der SIM-Karte (10) der mobilen Einrichtung (1) in den Speichermitteln (22) des Kommunikationsobjektes ermöglichen.

18. System gemäß einem der Ansprüche 14 bis 17, **dadurch gekennzeichnet, dass** die Verarbeitungsmittel (31) einer Betreiber-Einrichtung (3) das Verifizieren (48) der Integrität der von der mobilen Einrichtung (1) empfangenen IMEI (20), die das Klonen der Daten (104) ihrer SIM-Karte (10) in ein mittels der IMEI identifizierten Kommunikationsobjekt (2) anfordert, einerseits mit Hilfe von Mitteln zum Entschlüsseln der empfangenen IMEI (20) mit Hilfe des Entschlüsselungsschlüssels (201'), der in den Speichermitteln (32) einer Betreiber-Einrichtung (3) gespeichert ist, und andererseits mit Hilfe von Mitteln zum Vergleichen der entschlüsselten IMEI (20) mit der Mehrzahl von IMEIs (20), die in den Speichermitteln (32) von mindestens einer Betreiber-Einrichtung (3) gespeichert sind, durchführen.

19. System gemäß einem der Ansprüche 14 bis 18, **dadurch gekennzeichnet, dass** die Verarbeitungsmittel (31) von mindestens einer Betreiber-Einrichtung (3) aufweisen: Mittel zum automatischen Durchführen der Aktualisierung der Daten (104) in Bezug auf den IMSI-Klon (103) im Fall der Änderung der Daten (104) der SIM-Karte (10) der mobilen Einrichtung (1) und Mittel zum direkten Speichern der neuen Daten über ein drahtloses Telefonnetzwerk (300) in den Speichermitteln (22) des Kommunikationsobjektes (2) mit Hilfe der Verarbeitungsmittel (21) des Kommunikationsobjektes (2), die das Speichern autorisieren.

20. System gemäß einem der Ansprüche 14 bis 19, **dadurch gekennzeichnet, dass** die Verarbeitungsmittel (11) der mobilen Einrichtung (1) aufweisen: Mittel zum automatischen Durchführen der Aktualisierung der Daten (104) in Bezug auf den IMSI-Klon (103) im Fall einer Änderung der Daten (104) der SIM-Karte (10) der mobilen Einrichtung (1) und Mittel zum direkten Speichern der neuen Daten über ein drahtloses Telefonnetzwerk (300) oder über eine lokale drahtlose Verbindung (30) in den Speichermitteln (22) des Kommunikationsobjektes (2) mit Hilfe der Verarbeitungsmittel (21) des Kommunikationsobjektes (2), die das Speichern autorisieren.

21. System gemäß einem der Ansprüche 14 bis 20, **dadurch gekennzeichnet, dass** die Verarbeitungsmittel (21) des Kommunikationsobjektes (2), dem ein IMSI-Klon (103) zugeordnet wurde, eine Anwendung ausführen, die ausgehend von den in seinen Speichermitteln (22) gespeicherten Daten (104) die Nutzung des Vertrags des Teilnehmers ermöglicht.

22. System gemäß einem der Ansprüche 14 bis 21, **dadurch gekennzeichnet, dass** die Mehrzahl von IMEIs (20), die in den Speichermitteln (32) einer Betreiber-Einrichtung (3) gespeichert ist, mit Informationen verknüpft ist, die das Verwalten der IMEIs (20) von gestohlenen oder verlorengegangenen Kommunikationsobjekten (2) ermöglichen, und dass die Verarbeitungsmittel (31) von mindestens einer Betreiber-Einrichtung (3) gegebenenfalls jede Verknüpfung einer als gestohlen oder verloren angegebenen IMEI (20) mit einem IMSI-Klon (103), der von einer mobilen Einrichtung (1) angefordert wird, verbieten.

23. System gemäß einem der Ansprüche 14 bis 22, **dadurch gekennzeichnet, dass** die Module (14, 24, 34) zur Kommunikation über eine lokale drahtlose Verbindung (30), die sich in der mobilen Einrichtung (1), dem Kommunikationsobjekt (2) und einer Betreiber-Einrichtung (3) befinden, Bluetooth®-Sende-/Empfangs-Module sind.

24. System gemäß einem der Ansprüche 14 bis 23, **dadurch gekennzeichnet, dass** die Module (14, 24, 34) zur Kommunikation über ein drahtloses Telefonnetzwerk (300), die sich in der mobilen Einrichtung (1), dem Kommunikationsobjekt (2) und der Betreiber-Einrichtung (3) befinden, mit GSM/DCS- und UMTS-Netzen kompatibel sind.
